Europäisches Patentamt

European Patent Office

Office européen des brevets

(19)

(11) Publication number: **0 271 142 B1**

(12) **EUROPEAN PATENT SPECIFICATION**

(45) Date of publication of patent specification: **07.09.94**

(51) Int. Cl.⁵: **C08F 220/44**, D01F 6/40, //(C08F220/44,214:08,220:56, 228:00)

(21) Application number: **87202321.3**

(22) Date of filing: **25.11.87**

The file contains technical information submitted after the application was filed and not included in this specification

(54) **Improved modacrylic fibre, endowed with characteristics of reduced flammability and process for its preparation.**

(30) Priority: **04.12.86 IT 2255986**

(43) Date of publication of application:
**15.06.88 Bulletin 88/24**

(45) Publication of the grant of the patent:
**07.09.94 Bulletin 94/36**

(84) Designated Contracting States:
**AT BE CH DE ES FR GB GR LI LU NL SE**

(56) References cited:
**FR-A- 2 233 343**
**US-A- 3 651 013**
**US-A- 3 931 120**

(73) Proprietor: **ENICHEM FIBRE S.p.A.**
**Via Ruggero Settimo 55**
**I-90139 Palermo (IT)**

(72) Inventor: **Di Bonito, Renato**
**Via Tasso 91**
**I-80121 Napoli (IT)**
Inventor: **Tasselli, Franco**
**Via IV Novembre 23**
**I-75023 Montalbano Ionico, Matera (IT)**
Inventor: **Cognigni, Franco**
**Via Cupello 3/A**
**I-20097 San Donato Milanese, Milano (IT)**

(74) Representative: **Fusina, Gerolamo et al**
**Ing. Barzanò & Zanardo Milano S.p.A,**
**Via Borgonuovo, 10**
**I-20121 Milano (IT)**

Rank Xerox (UK) Business Services
(3.10/3.09/3.3.3)

**Description**

The present invention is concerned with a modacrylic fibre showing a reduced flammability, an improved dyeability and processability, a better compactness of the fibrous structure with no cracking, even after the subsequent thermal treatments, such as in dyeing.

The modacrylic fibres are known in the art, and are characterized by a relatively high content of a halogenated comonomer, such as vinyl chloride and vinylidene chloride, capable of giving the same fibres a certain degree of self-extinguishing properties.

It is known that the modacrylic fibres show textile and feel characteristics which are poorer than of the acrylic fibres.

Furthermore, the modacrylic fibres which contain vinyl chloride, and/or vinylidene chloride, as the halogenated comonomer, show the basic defect of undergoing dulling, accompanied by the loss of their compact structure, after the treatment in a boiling aqueous bath, e.g., in dyeing.

In the art, various solutions have been proposed in order to maintain the compactness in structure, and, consequently, the gloss of the modacrylic fibre, after a treatment in a boiling aqueous bath. So, e.g., in US-A-4,223,108, a process is disclosed for the preparation of modacrylic fibres, by the wet-spinning technique, which are stable to the thermal treatments. In particular, such fibres are obtained by means of the spinning of two separately obtained acrylic copolymers, one of which is a copolymer based on acrylonitrile and vinylidene chloride, and the other is a copolymer based on acrylonitrile and a sulphonated comonomer, such as sodium acrylamido-propane-sulphonate and sodium acrylamido-methylpropane-sulphonate.

Such an operating way, although overcomes the technical problem of the fibre dulling after the fibre boiling, causes the disadvantages deriving from the separate preparation of the two copolymers, and from the preparation and blending of the relevant solutions in the step which precedes the spinning, with consequent economic disadvantages. Furthermore, the fibres obtained by means of such a process require high amounts of sulphonated comonomer (generally of the order of 2 - 4%) to maintain their gloss, that involves a high dyeing speed, and, consequently, difficulties in achieving a good dyeing homogeneousness.

Furthermore, US-A-4,002,809, US-A-4,056,516 and US-A-4,126,603 disclose processes for the preparation of modacrylic fibres, wherein special comonomers, or high amounts of sulphonated comonomers, or special additives, usually added during the spinning step, are used. In any case, these are expensive solutions, which furthermore show difficulties deriving from problems of dyeing homogeneousness, and/or from the complexities introduced in the process.

FR-A-2 233 345 discloses flameproof copolymers consisting of from 37% to 92,5% wt.of acrylonitrile, from 5% to 45% wt.of vinylidene chloride, from 2% to 15% wt. of acrylamide or methacrylamide, and from 0,5% to 3% wt. of a further monomer, among which sodium methallyl sulphonate is cited.

US-A-3 931 120 discloses flame-resistant copolymers consisting of from 50% to 70% by wt. of acrylonitrile, from 25% to 40% by wt. of vinylidene chloride, from 1% to 2,5% wt. of bis(2-chloroethyl) vinyl phosphonate, from 2% to 10% by wt. of acrylamide and from 0,1% to 1,0% wt. of sodium methallyl sulphonate.

US-A-3 651 013 discloses a copolymer consisting of from 5% to 25% wt. of vinylidene chloride, from 4% to 25% wt. of methacrylonitrile, and from 3% to 14% wt. of acrylamide and/or methacrylamide.

None of these prior art documents, however, appears to be concerned with problems other than the flame-resistance, so that the other problems connected with fibre compactness, gloss and dyeability are neither posed nor solved.

The invention, therefore, provides a dyeable, reduced-flammability modacrylic fibre consisting of a wet-spun copolymer composed of:

- from 61,45% to 65% by weight of acrylonitrile;
- from 34% to 36% by weight of vinylidene chloride;
- from 0,75% to 1,8% by weight of acrylamide, and
- from 0,25% to 0,75% by weight of an alkali metal methallyl sulphonate,

the 0,2% by weight solution of said copolymer in dimethylformamide having a relative viscosity of from 1,25 to 1,35 at 35°C, when measured in an Ubbelhode viscometer.

According to another important aspect of this invention, a process is provided, for preparing the hereinabove defined modacrylic fibre, which comprises the steps of:

(a) Copolymerizing a monomer mixture composed of:

- from 61% to 66% by weight of acrylonitrile;
- from 32% to 34% by weight of vinylidene chloride;
- from 1,5% by weight to 3,5% by weight of acrylamide, and

- from 0,5% to 1,5% by weight of an alkali metal methallyl sulphonate,

in an aqueous suspension of said comonomers in which the weight ratio, of the water to the comonomers is from 6:1 to 3:1, in the presence of a redox catalyst comprised of an alkali metal hydroxylamine sulphonate and an alkali metal bisulphite, at a temperature of from 30°C to 45°C and a pH of from 2,2 to 4,0, for a time of from 7 h to 14 h, until a conversion of from 85% to 95% of the comonomers is obtained, and

(b) wet-spinning a solution of the copolymer exiting step (a) through a spinneret in an aqueous coagulation bath.

The preferred alkali metal methallyl sulphonate is sodium methallyl suphonate.

The preferred range for the water/comonomers ratio in the aqueous suspension is of from 5:1 to 4:1.

The preferred redox catalyst consists of sodium hydroxylamine sulphonate and sodium bisulphite.

The copolymerization is carried out continuously and the preferred pH range is from 2,3 to 2,7, whereas the preferred temperature range is of from 35°C to 43°C, the preferred time range being of from 9 h to 12 h, a condition in which the conversion of the comonomers into the expected copolymer is of from 85% to 95%. The as-obtained copolymer is withdrawn from the polymerization medium, washed to remove residual unreacted comonomers and catalyst, and dried: it is fairly soluble in the conventional spinning solvents, such as dimethylformamide and dimethylacetamide, and stable and easily spinnable solutions are obtained therefrom.The preferred spinnable solution is a solution of the copolymer in dimethylacetamide at a maximum concentration of 26,5% by weight of the copolymer in dimethylacetamide, which, upon deaeration, is spun through a spinneret in a coagulation bath consisting of a 60:40 by weight water/dimethylacetamide mixture.

The dissolution of the copolymer and the wet spinning are conveniently carried at at a temperature of 30°C.

The fibre collected from the coagulation bath is stretched, washed with water, finished and dried.

The stretching ratio is preferably of about 7 times the initial length, and the stretching step is preferably carried out inside a water/dimethylacetamide blend, with a ratio of 85/15 by weight, at a temperature of approximately 100°C.

The washing step is commonly carried out with water at a temperature of approximately 70°C In the finishing step, the fibre is treated with a mixture of antistatic and lubricating products.

The drying step is suitably carried out on heated rollers at a temperature of 140°C.

The dried fibre it then transformed into a tow, which is crimped is then treated with steam at a temperature of the order of 110-130°C, according to a cycle used for the normal acrylic fibres.

The modacrylic fibre, according to the present invention, shows characteristics of reduced flammability, it being meant, by this expression, that the fibre LOI (limiting oxygen index) value is of at least 26. Furthermore, such modacrylic fibre shows improved general characteristics and, in particular, shows good mechanical characteristics, good characteristics of dyeability and a high structural stability in the high-temperature treatments, e.g,, with water at 100°C, or with steam, or the like.

Such a modacrylic fibre is furthermore obtained by means of a simple and economically favourable process, which overcomes the drawbacks of the processes known from the prior art, which require the formation, and the blending of two distinct copolymers, or the use of high amounts of sulphonated comonomer, or the use of special comonomers, or, finally, the use of special additives, which are generally added to the polymeric solution, and/or to the spinning baths.

The invention will be illustrated by a few Examples, aided by 14 photographs, of which the odd-numbered ones show the fibres before boiling and the even-numbered ones show the fibres after boiling.

Example 1

A pilot plant for continuous polymerization is used, which is constituted by three reactors connected in series, whose capacities are respectively of 60, 30 and 100 litres. The reactors are equipped with stirring means and with temperature control system.

To the first reactor a stream of 1.336 kg/hour of monomers is fed, which has the following compositions:

| | |
|---|---|
| acrylonitrile | 64 % by weight |
| vinylidene chloride | 32.9 % by weight |
| acrylamide | 2.25% by weight |
| sodium metallyl-sulphonate | 0.85% by weight |

Furthermore, to the first reactor 0.0013 kg of sulphuric acid, 0.022 kg of sodium bisulphite, 0.0075 kg of sodium hydroxylamine-sulphonate and 4.5 kg of water per each kg of monomer mixture are fed.

In the first reactor and in the second reactor, the process is carried out at a temperature of 40°C, and with a total residence time of approximately 12 hours, with a conversion of the monomers of about 85% being achieved. The so-obtained copolymer suspension is stored and cooled to 20°C inside the third reactor.

From this latter reactor, the suspension is sent to a centrifuge for the separation step. The so-separated copolymer is washed many times with hot water, until the unreacted monomers and the catalyst residues are completely eliminated. The copolymer is then dried on a hot-air fluid-bed equipment, and shows a relative viscosity of 1.30, when determined as hereinabove indicated.

The composition of the copolymer is the following:

| acrylonitrile | 63.8 % by weight |
| vinylidene chloride | 34 % by weight |
| acrylamide | 1.7 % by weight |
| sodium metallyl-sulphonate | 0.5 % by weight |

The copolymer contains furthermore 1% by weight of water.

By such a copolymer, a spinning solution in dimethylacetamide is prepared, with a concentration of 26.5% by weight of the same copolymer. The solution is prepared at 30°C, is deaerated and is spun through a spinnerette of 3,000 bores, with capillaries of 0,052 mm of diameter. As the coagulation bath, a 60/40 by weight water/dimethylacetamide blend, maintained at 30°C, is used.

The fibre, after the coagulation, is collected at the speed of 9 metres/minute, is then stretched with a 7:1 stretch ratio in an 85/15 weight ratio water/dimethylformamide bath maintained at 100°C; the fibre is washed with water at 70°C, is finished with a mixture of antistatic and lubricating products, is dried on rollers heated at 140°C and is then collected on a bobbin at a speed of 63 metres/minute. From 10 bobbins placed on a creel, a tow of 7.5 Ktex is prepared, which is crimped and is then treated with steam at 128°C, according to the cycle customarily used for normal acrylic fibre.

The characteristics of the so obtained modacrylic fibre are reported in following Table 1, together with those shown by the commercial acrylic fibre Sironil[R] 3.3.L, obtained in a similar way by starting from a copolymer of acrylonitrile (93% by weight), methyl acrylate (6.9% by weight) and sodium metallyl-sulphonate (0.1% by weight).

Table 1

|  | Modacrylic Fibre (Example 1) | Syronil[R] 3.3L Fibre |
|---|---|---|
| Filament count, dtex | 3.18 | 3.30 |
| Toughness, CN/tex | 24.7 | 26.7 |
| Elongation, % | 38.3 | 37.2 |
| Knot tenacity, CN/tex | 17.6 | 17.7 |
| Knot elongation, % | 23.3 | 18.6 |
| Knot toughness/TQ ratio | 66 % | 66 % |
| Knot elongation x toughness | 420 | 324 |
| Shrinkage in water at 100°C | 0.3 | 0.7 |
| LOI[1] | 27 | 20 |
| T%[2] (dyeability) | 28.2 | 32 |
| Stability after 1-hour boiling in water | good[3] | good[4] |

(TQ = As such).

(1) Determined according to ASTM D2863-70 Standard

(2) The dyeability is defined as the amount of dye absorbed by the fibre during the dyeing, expressed as a percentage of the used dye amount. The measurement is carried out by dyeing the fibre with a solution containing a known concentration of cationic dye, and

subsequently determining on a colorimeter the amount remaining in the bath. The result is expressed as the % of dye absorbed by the fibre, with reference to the used amount of dye. This method supplies an indication of the capability of dye absorption by the fibre.

(3) See photographs 1 and 2 of the fibre of Example 1, before and after boiling.

(4) See photographs 3 and 4 of Sironil$^{(R)}$ 3.3L fibre, before and after boiling.

Example 2

Four tests are carried out, in a similar way to Example 1, with the composition of the mixture of monomers sent to polymerization being varied.

More particularly:

| "A" Test (Comparative Test) | |
|---|---|
| acrylonitrile | 63 % by weight |
| vinylidene chloride | 32.25 % by weight |
| acrylamide | 4 % by weight |
| sodium metallyl-sulphonate | 0.75 % by weight |

| "B" Test (Comparative Test) | |
|---|---|
| acrylonitrile | 63 % by weight |
| vinylidene chloride | 32 % by weight |
| acrylamide | 4.25 % by weight |
| sodium metallyl-sulphonate | 0.75 % by weight |

| "C" Test (Comparative Test) | |
|---|---|
| acrylonitrile | 63.5 % by weight |
| vinylidene chloride | 32 % by weight |
| acrylamide | 3.75 % by weight |
| sodium metallyl-sulphonate | 0.75 % by weight |

| "D" Test | |
|---|---|
| acrylonitrile | 65.25 % by weight |
| vinylidene chloride | 32 % by weight |
| acrylamide | 2 % by weight |
| sodium metallyl-sulphonate | 0.75 % by weight |

The so-obtained copolymers shoe the following characteristics:

| "A" Test | Relative viscosity ($n_r$)<br>% by weight of chlorine | 1.30<br>25.9 |
|---|---|---|
| "B" Test | Relative viscosity ($n_r$)<br>% by weight of chlorine | 1.29<br>23.8 |
| "C" Test | Relative viscosity ($n_r$)<br>% by weight of chlorine | 1.30<br>25.3 |
| "D" Test | Relative viscosity ($n_r$)<br>% by weight of chlorine | 1.29<br>24.5 |

These copolymers are submitted to spinning, according to a process similar to that disclosed in Example 1, and the modacrylic fibres are obtained, whose characteristics are shown in following Table 2. In Table 2, also the temperatures of steam treatment used in the preparation of the fibres are reported.

EP 0 271 142 B1

TABLE 2

| Test | A | A | B | C | D |
|------|------|------|------|------|------|
| Filament count, dtex | 3.25 | 2.75 | 3.76 | 3.33 | 3.22 |
| Toughness, CN/tex | 26.0 | 30.1 | 22.7 | 25.8 | 26.8 |
| Elongation, % | 40.6 | 34.4 | 47.5 | 38.8 | 34.5 |
| Knot tenacity, CN/tex | 15.8 | 11.7 | - | - | - |
| Knot elongation, % | 23.1 | 14.4 | - | - | - |
| Knot Toughness x Elongation | 365 | 168 | - | - | - |
| T % | 30.4 | 23.4 | 29.6 | 29.9 | 23 |
| Stability after 1-hour boiling in water | poor[1] | poor | poor[2] | poor[3] | good[4] |
| Steam treatment temperature ($^{o}$C) | 118 | 110 | 118 | 118 | 128 |

NOTES TO TABLE 2:

(1) See photographs 5 and 6 of the fibre, before and after boiling.

(2) See photographs 7 and 8 of the fibre, before and after boiling.

(3) See photographs 9 and 10 of the fibre, before and after boiling.

(4) See photographs 11 and 12 of the fibre, before and after boiling.

Example 3 (Comparative Example)

Example 1 is repeated, with a copolymer containing 63% of acrylonitrile, 32% of vinylidene chloride, 4% of acrylamide and 1% of sodium methallyl-sulphonate being formed.

The produced fibre shows good characteristics of dyeability, and a good structural stability after boiling in water. For that purpose, reference is made to photographs 13 and 14 of the fibre, before and after the boiling.

However, considerable difficulties in polymerization processability, and in the spinning step (irregular stretching) had to be faced up.

**Claims**

**Claims for the following Contracting States : AT, BE, CH, DE, FR, GB, GR, LI, LU, NL, SE**

1. A dyeable, reduced-flammability modacrylic fibre consisting of a wet-spun copolymer composed of:
   - from 61,45% to 65% by weight of acrylonitrile;
   - from 34% to 36% by weight of vinylidene chloride;
   - from 0,75% to 1,8% by weight of acrylamide,and
   - from 0,25% to 0,75% by weight of an alkali metal methallyl sulphonate,
   the 0,2% by weight solution of said copolymer in dimethylformamide having a relative viscosity of from 1,25 to 1,35 at 35°C, when measured in an Ubbelhode viscometer.

2. Process for preparing a modacrylic fibre as defined in Claim 1, comprising the steps of:
   (a) Copolymerizing a monomer mixture composed of:
   - from 61% to 66% by weight of acrylonitrile;
   - from 32% to 34% by weight of vinylidene chloride;
   - from 1,5% by weight to 3,5% by weight of acrylamide, and
   - from 0,5% to 1,5% by weight of an alkali metal methallyl sulphonate,
   in an aqueous suspension of said comonomers in which the weight ratio, of the water to the comonomers is from 6:1 to 3:1, in the presence of a redox catalyst comprised of an alkali metal hydroxylamine sulphonate and an alkali metal bisulphite, at a temperature of from 30°C to 45°C and a pH of from 2,2 to 4,0, for a time of from 7 h to 14 h, until a conversion of from 85% to 95% of the comonomers is obtained, and
   (b) wet-spinning a solution of the copolymer exiting step (a) through a spinneret in an aqueous coagulation bath.

3. Process according to Claim 2, wherein the water to comonomers weight ratio in the aqueous suspension is of from 5:1 to 4:1.

4. Process according to Claim 2, wherein the redox catalyst consists of sodium hydroxylamine sulphonate and sodium bisulphite.

9

**5.** Process according to Claim 2, wherein the copolymerization temperature is of from 35°C to 43°C.

**6.** Process according to Claim 2, wherein the copolymerization pH is of from 2,3 to 2,7.

**7.** Process according to Claim 2, wherein the alkali metal methallyl sulphonate is sodium methallyl sulphonate.

**8.** Process according to Claim 2, wherein the wet-spinning step (b) is carried out by spinning a solution of the copolymer in dimethylacetamide through a spinneret in an aqueous dimethylacetamide coagulation bath.

**9.** Process according to Claim 8, wherein the solution of the copolymer in dimethylacetamide has a concentration of 26,5% by weight of dimethylacetamide.

**10.** Process according to Claim 8, wherein the coagulation bath is an aqueous mixture in which the weight ratio of water to dimethylacetamide is 60:40.

**Claims for the following Contracting State : ES**

**1.** Process for preparing a dyeable, reduced-flammability modacrylic fibre consisting of a wet-spun copolymer composed of:
- from 61,45% to 65% by weight of acrylonitrile;
- from 34% to 36% by weight of vinylidene chloride;
- from 0,75% to 1,8% by weight of acrylamide, and
- from 0,25% to 0,75% by weight of an alkali metal methallyl sulphonate,

the 0,2% by weight solution of said copolymer in dimethylformamide having a relative viscosity of from 1,25 to 1,35 at 35°C, when measured in an Ubbelhode viscometer, characterized by comprising the steps of:
(a) Copolymerizing a monomer mixture composed of:
- from 61% to 66% by weight of acrylonitrile;
- from 32% to 34% by weight of vinylidene chloride;
- from 1,5% to 3,5% by weight of acrylamide, and
- from 0,5% to 1,5% by weight of an alkali metal methallyl sulphonate,

in an aqueous suspension of said comonomers in which the weight ratio, of the water to the comonomers is from 6:1 to 3:1, in the presence of a redox catalyst comprised of an alkali metal hydroxylamine sulphonate and an alkali metal bisulphite, at a temperature of from 30°C to 45°C and a pH of from 2,2 to 4,0, for a time of from 7 h to 14 h, until a conversion of from 85% to 95% of the comonomers is obtained, and
(b) wet-spinning a solution of the copolymer exiting step (a) through a spinneret in an aqueous coagulation bath.

**2.** Process according to Claim 1, characterized in that the water to comonomers weight ratio in the aqueous suspension is of from 5:1 to 4:1.

**3.** Process according to Claim 1, characterized in that the redox catalyst consists of sodium hydroxylamine sulphonate and sodium bisulphite.

**4.** Process according to Claim 1, characterized in that the copolymerization temperature is of from 35°C to 43°C.

**5.** Process according to Claim 1, characterized in that the copolymerization pH is of from 2,3 to 2,7.

**6.** Process according to Claim 1, characterized in that the alkali metal methallyl sulphonate is sodium methallyl sulphonate.

**7.** Process according to Claim 1, characterized in that the wet-spinning step (b) is carried out by spinning a solution of the copolymer in dimethylacetamide through a spinneret in an aqueous dimethylacetamide coagulation bath.

EP 0 271 142 B1

8. Process according to Claim 7, characterized in that the solution of the copolymer in dimethylacetamide has a concentration of 26,5% by weight of dimethylacetamide.

9. Process according to Claim 7, characterized in that the coagulation bath is an aqueous mixture in which the weight ratio of water to dimethylacetamide is 60:40.

**Patentansprüche**
**Patentansprüche für folgende Vertragsstaaten : AT, BE, CH, DE, FR, GB, GR, LI, LU, NL, SE**

1. Färbbare Modacrylfaser mit reduzierter Entflammbarkeit, bestehend aus einem naßgesponnenen Copolymer der Zusammensetzung:
   - von 61,45 bis 65 Gew.-% Acrylnitril
   - von 34 bis 36 Gew.-% Vinylidenchlorid
   - von 0,75 bis 1,8 Gew.-% Acrylamid und
   - von 0,25 bis 0,75 Gew.-% eines Alkalimetall-Methallylsulfonats,
   wobei die 0,2 gew.-%-ige Lösung des Copolymer in Dimethylformamid eine relative Viskosität von 1,25 bis 1,35 bei 35°C beträgt, wenn sie in einem Ubbelohde-Viskosimeter gemessen wird.

2. Verfahren zur Herstellung einer Modacrylfaser wie in Anspruch 1 definiert, welches die Schritte umfaßt:
   (a) Copolymerisieren eines Monomerengemisches der Zusammensetzung:
   - von 61 bis 66 Gew.-% Acrylnitril
   - von 32 bis 34 Gew.-% Vinylidenchlorid
   - von 1,5 bis 3,5 Gew.-% Acrylamid und
   - von 0,5 bis 1,5 Gew.-% eines Alkalimetall-Methallylsulfonats
   in einer wässerigen Suspension der genannten Comonomere, in welcher das Gewichtsverhältnis des Wassers zu den Comonomeren von 6:1 bis 3:1 beträgt, in Gegenwart eines Redox-Katalysators, welcher ein Alkalimetall-Hydroxylaminsulfonat und ein Alkalimetallbisulfit umfaßt, bei einer Temperatur von 30°C bis 45°C und einem pH von 2,2 bis 4,0, für eine Zeit von 7h bis 14h, bis eine Konversion von 85 % bis 95 % der Comonomere erhalten wird, und
   (b) Naßspinnen einer Lösung des Copolymer-Ausgangsschrittes (a) durch eine Spinndüse in ein wässeriges Koagulationsbad.

3. Verfahren nach Anspruch 2, worin das Gewichtsverhältnis von Wasser zu Comonomer in der wässerigen Suspension von 5:1 bis 4:1 beträgt.

4. Verfahren nach Anspruch 2, worin der Redox-Katalysator aus Natriumhydroxylaminsulfonat und Natriumbisulfit besteht.

5. Verfahren nach Anspruch 2, worin die Copolymerisations-Temperatur von 35 - 43°C beträgt.

6. Verfahren nach Anspruch 2, worin der Copolymerisations-pH von 2,3 bis 2,7 beträgt.

7. Verfahren nach Anspruch 2, worin das Alkalimetall-Methallylsulfonat Natriummethallylsulfonat ist.

8. Verfahren nach Anspruch 2, worin der Naßspinnschritt (b) durch Verspinnen einer Lösung des Copolymers in Dimethylacetamid durch eine Spinndüse in ein wässeriges Dimethylacetamid-Koagulationsbad vorgenommen wird.

9. Verfahren nach Anspruch 8, worin die Lösung des Copolymers in Dimethylacetamid eine Konzentration von 26,5 Gew.-% bezogen auf Dimethylacetamid beträgt.

10. Verfahren nach Anspruch 8, worin das Koagulationsbad ein wässeriges Gemisch ist, in welchem das Gewichtsverhältnis von Wasser zu Dimethylacetamid 60:40 beträgt.

**Patentansprüche für folgenden Vertragsstaat : ES**

1. Verfahren zur Herstellung einer färbbaren Modacrylfaser mit reduzierter Entflammbarkeit, bestehend aus einem naßgesponnenen Copolymer der Zusammensetzung:

11

- von 61,45 bis 65 Gew.-% Acrylnitril
- von 34 bis 36 Gew.-% Vinylidenchlorid
- von 0,75 bis 1,8 Gew.-% Acrylamid und
- von 0,25 bis 0,75 Gew.-% eines Alkalimetall-Methallylsulfonats,

wobei die 0,2 gew.-%-ige Lösung des Copolymer in Dimethylformamid eine relative Viskosität von 1,25 bis 1,35 bei 35°C hat, wenn sie in einem Ubbelohde-Viskosimeter gemessen wird, gekennzeichnet durch die Schritte:

(a) Copolymerisieren eines Monomerengemisches der Zusammensetzung:
- von 61 bis 66 Gew.-% Acrylnitril
- von 32 bis 34 Gew.-% Vinylidenchlorid
- von 1,5 bis 3,5 Gew.-% Acrylamid und
- von 0,5 bis 1,5 Gew.-% eines Alkalimetall-Methallylsulfonats

in einer wässerigen Suspension der genannten Comonomere, in welcher das Gewichtsverhältnis des Wassers zu den Comonomeren von 6:1 bis 3:1 beträgt, in Gegenwart eines Redox-Katalysators, welcher ein Alkalimetall-Hydroxylaminsulfonat und ein Alkalimetallbisulfit umfaßt, bei einer Temperatur von 30°C bis 45°C und einem pH von 2,2 bis 4,0, für eine Zeit von 7h bis 14h, bis eine Konversion von 85 % bis 95 % der Comonomere erhalten wird, und

(b) Naßspinnen einer Lösung des Copolymer-Ausgangsschrittes (a) durch eine Spinndüse in ein wässeriges Koaguletionsbad.

2. Verfahren nach Anspruch 1, dadurch gekennzeichnet, daß das Gewichtsverhältnis von Wasser zu Comonomer in der wässerigen Suspension von 5:1 bis 4:1 beträgt.

3. Verfahren nach Anspruch 1, dadurch gekennzeichnet, daß der Redox-Katalysator aus Natriumhydroxylaminsulfonat und Natriumbisulfit besteht.

4. Verfahren nach Anspruch 1, dadurch gekennzeichnet, daß die Copolymerisations-Temperatur von 35 bis 43°C beträgt`

5. Verfahren nach Anspruch 1, dadurch gekennzeichnet, daß der Copolymerisations-pH von 2,3 bis 2,7 beträgt.

6. Verfahren nach Anspruch 1, dadurch gekennzeichnet, daß das Alkalimetall-Methallylsulfonat Natriummethallylsulfonat ist.

7. Verfahren nach Anspruch 1, dadurch gekennzeichnet, daß der Naßspinnschritt (b) durch Verspinnen einer Lösung des Copolymers in Dimethylacetamid durch eine Spinndüse in ein wässeriges Dimethylacetamid-Koegulationsbad vorgenommen wird.

8. Verfahren nach Anspruch 7, dadurch gekennzeichnet, daß die Lösung des Copolymers in Dimethylacatemid eine Konzentration von 26,5 Ges.-% bezogen auf Dimethylacetamid betragt.

9. Verfahren nach Anspruch 7, dadurch gekennzeichnet, daß das Koagulationsbad ein wässariges Gemisch ist, in welchem das Gewichtsverhältnis von Wasser Zu Dimethylacetamid 60:40 beträgt.

**Revendications**

**Revendications pour les Etats contractants suivants : AT, BE, CH, DE, FR, GB, GR, LI, LU, NL, SE**

1. Fibre modacrylique à inflammabilité réduite, pouvant être teinte, constituée d'un copolymère filé au mouillé composé

de 61,45 % à 65 % en poids d'acrylonitrile,

de 34 % à 36 % en poids de chlorure de vinylidène,

de 0,75 % à 1,8 % en poids d'acrylamide, et

de 0,25 % à 0,75 % en poids d'un méthallysulfonate de métal alcalin, une solution à 0,2 % en poids dudit copolymère dans le diméthylformamide ayant une viscosité relative comprise entre 1,25 et 1,35, à 35 °C, mesurée dans un viscosimètre d'Ubbelhode.

**2.** Procédé de préparation d'une fibre modacrylique définie dans la revendication 1, comprenant les étapes de :

(a) copolymérisation d'un mélange de monomères composé :
- de 61 % à 66 % en poids d'acrylonitrile
- de 32 % à 34 % en poids de chlorure de vinylidène,
- de 1,5 % à 3,5 % en poids d'acrylamide, et
- de 0,5 % à 1,5 % en poids d'un méthallylsulfonate de métal alcalin,

dans une suspension aqueuse desdits comonomères dans laquelle le rapport en poids de l'eau aux comonomères est de 6:1 à 3:1, en présence d'un catalyseur rédox constitué d'hydroxylamine-sulfonate de métal alcalin et d'hydrogénosulfite de métal alcalin, à une température de 30 °C à 45 °C et à un pH de 2,2 à 4,0 pour une durée de 7h à 14h, jusqu'à ce qu'une conversion de 85 % à 95 % des comonomères soit atteinte, et

(b) filage au mouillé d'une solution du copolymère de l'étape (a) à travers une filière dans un bain aqueux coagulant.

**3.** Procédé conforme à la revendication 2, dans lequel le rapport en poids de l'eau au comonomères dans la suspension aqueuse est de 5:1 à 4:1.

**4.** Procédé conforme à la revendication 2, dans lequel le catalyseur rédox est constitué d'hydoxylamine-sulfonate de sodium et d'hydrogénosulfite de sodium.

**5.** Procédé conforme à la revendication 2, dans lequel la température de copolymérisation est comprise entre 35 °C et 43 °C.

**6.** Procédé conforme à la revendication 2, dans lequel le pH de copolymérisation est compris entre 2,3 et 2,7.

**7.** Procédé conforme à la revendication 2, dans lequel le méthallylsufonate de métal alcalin est le méthallylsulfonate de sodium.

**8.** Procédé conforme à la revendication 2, dans lequel l'étape de filage au mouillé (b) est réalisée en filant une solution du copolymère dans le diméthylacétamide à travers une filière dans un bain coagulant aqueux au diméthylacétamide.

**9.** Procédé conforme à la revendication 8, dans lequel la solution du copolymère dans le diméthylacétamide a une concentration de 26,5% en poids de diméthylacétamide.

**10.** Procédé conforme à la revendication 8, dans lequel le bain coagulant est un mélange aqueux dans lequel le rapport de l'eau au diméthylacétamide est de 60:40.

**Revendications pour l'Etat contractant suivant : ES**

**1.** Procédé de préparation d'une fibre modacrylique à inflammabilité réduite, pouvant être teinte, constituée d'un copolymère filé au mouillé composé
de 61,45 % à 65 % en poids d'acrylonitrile,
de 34 % à 36 % en poids de chlorure de vinylidène,
de 0,75 % à 1,8 % en poids d'acrylamide, et
de 0,25 % à 0,75 % en poids d'un méthallylsulfonate de métal alcalin, une solution à 0,2 % en poids dudit copolymère dans le diméthylformamide ayant une viscosité relative comprise entre 1,25 et 1,35, à 35 °C, mesurée dans un viscosimètre d'Ubbelhode, comprenant les étapes de :
(a) copolymérisation d'un mélange de monomères compose :
- de 61 % à 66 % en poids d'acrylonitrile
- de 32 % à 34 % en poids de chlorure de vinylidène,
- de 1,5 % à 3,5 % en poids d'acrylamide, et
- de 0,5 % à 1,5 % en poids d'un méthallylsulfonate de métal alcalin,
dans une suspension aqueuse desdits comonomères dans laquelle le rapport en poids de l'eau aux comonomères est de 6:1 à 3:1, en présence d'un catalyseur rédox constitué d'hydroxylamine-sulfonate de métal alcalin et d'hydrogénosulfite de métal alcalin, à une température de 30 °C à 45 °C et à un pH de 2,2 à 4,0 pour une durée de 7h à 14h, jusqu'à ce qu'une conversion de 85 % à 95 % des comonomères soit atteinte, et

(b) filage au mouillé d'une solution du copolymère de l'étape (a) à travers une filière dans un bain aqueux coagulant.

2. Procédé conforme à la revendication 1, dans lequel le rapport en poids de l'eau au comonomères dans la suspension aqueuse est de 5:1 à 4:1.

3. Procédé conforme à la revendication 1, dans lequel le catalyseur rédox est constitué d'hydoxylamine-sulfonate de sodium et d'hydrogénosulfite de sodium.

4. Procédé conforme à la revendication 1, dans lequel la température de copolymérisation est comprise entre 35 °C et 43 °C.

5. Procédé conforme à la revendication 1, dans lequel le pH de copoly mérisation est compris entre 2,3 et 2,7.

6. Procédé conforme à la revendication 1, dans lequel le méthallylsufonate de métal alcalin est le méthallylsulfonate de sodium.

7. Procédé conforme à la revendication 1, dans lequel l'étape de filage au mouillé (b) est réalisée en filant une solution du copolymère dans le diméthylacétamide à travers une filière dans un bain coagulant aqueux au diméthylacétamide.

8. Procédé conforme à la revendication 7, dans lequel la solution du copolymère dans le diméthylacétamide a une concentration de 26,5% en poids de diméthylacétamide.

9. Procédé conforme à la revendication 7, dans lequel le bain coagulant est un mélange aqueux dans lequel le rapport de l'eau au diméthylacétamide est de 60:40.

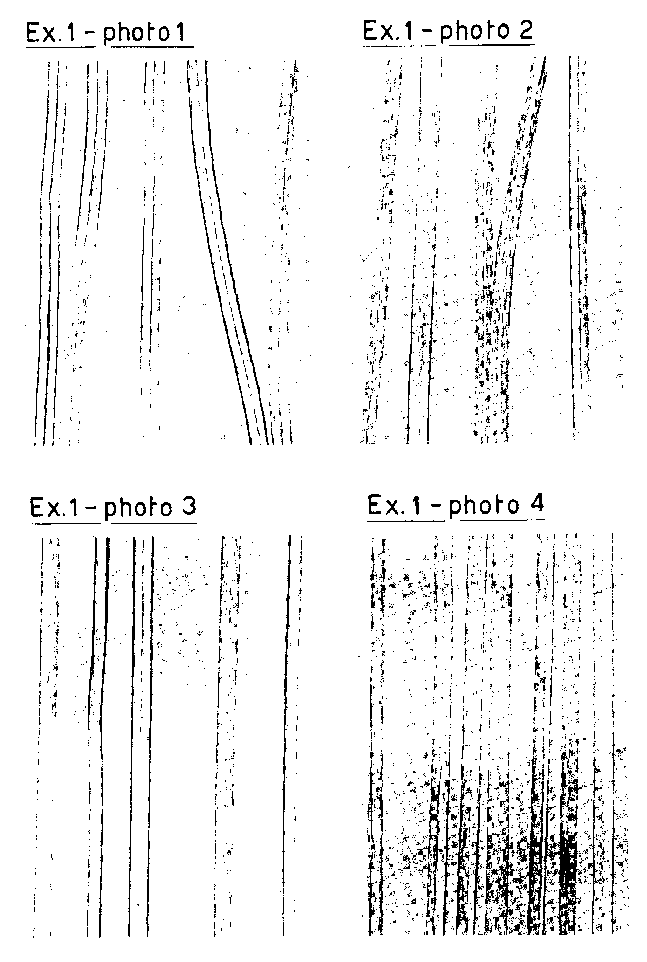

## Ex.1 – photo 1

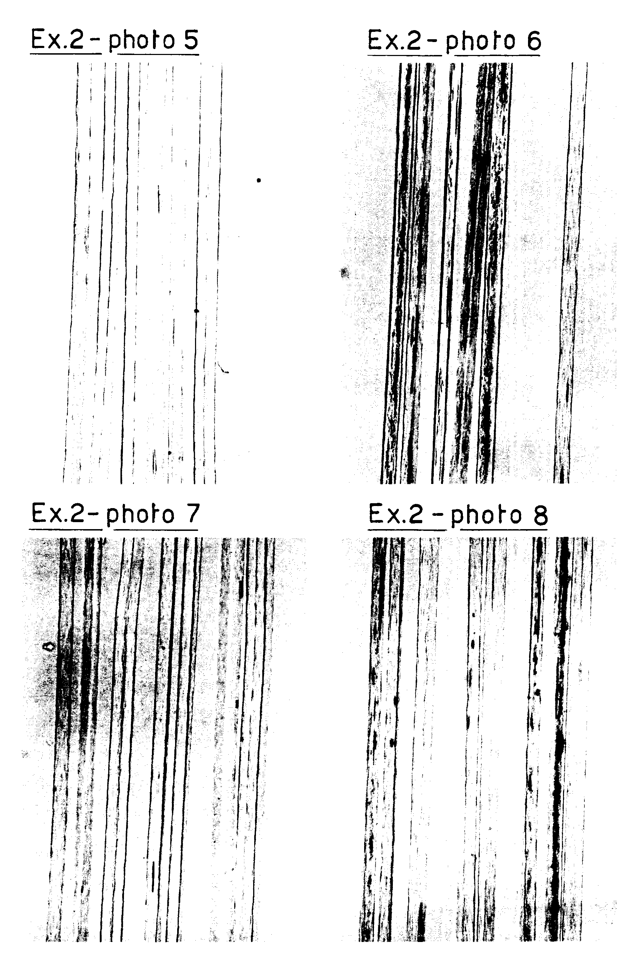

## Ex.1 – photo 2

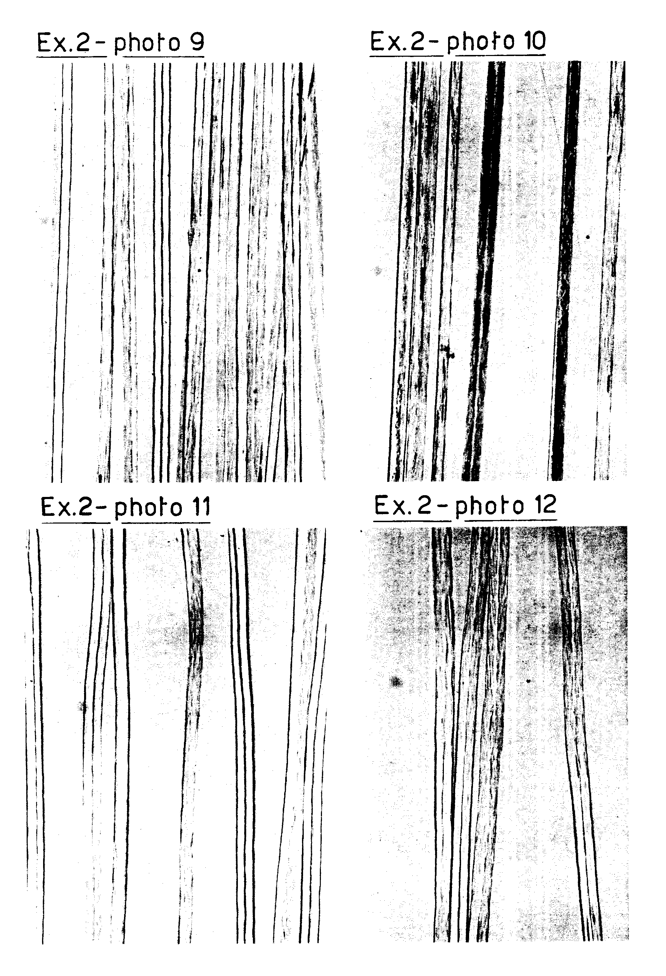

## Ex.1 – photo 3

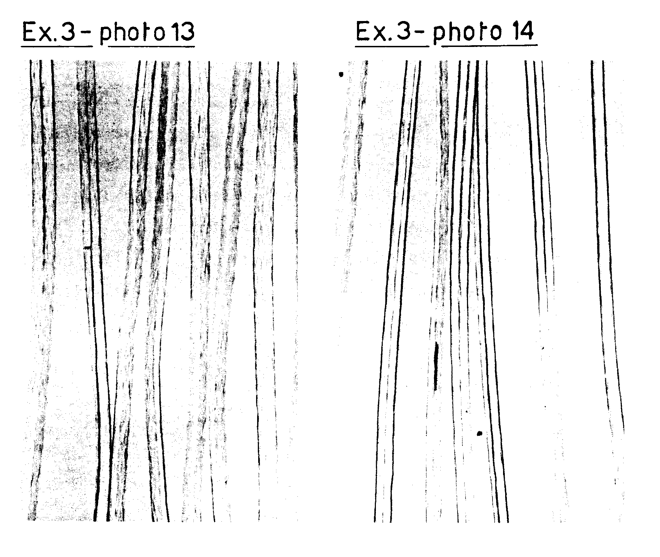

## Ex.1 – photo 4

## Ex.2 - photo 5

## Ex.2 - photo 6

## Ex.2 - photo 7

## Ex.2 - photo 8

Ex.2- photo 9

Ex.2- photo 10

Ex.2- photo 11

Ex.2- photo 12

## Ex.3- photo 13

## Ex.3- photo 14